# EUROPEAN PATENT SPECIFICATION

(11) **EP 3 273 567 B1**
(45) Date of publication and mention of the grant of the patent: **24.04.2019**
(21) Application number: 15885403.4
(22) Date of filing: 16.03.2015
(51) Int. Cl.: H02J 3/32, H02J 7/00, H01M 10/42, H01M 10/44

(54) **STORAGE BATTERY MANAGEMENT DEVICE, METHOD, AND PROGRAM**
SPEICHERBATTERIEVERWALTUNGSVORRICHTUNG, VERFAHREN UND PROGRAMM
DISPOSITIF, PROCÉDÉ ET PROGRAMME DE GESTION DE BATTERIE RECHARGEABLE

(43) Date of publication of application: 24.01.2018
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: OKABE, Ryo, Tokyo 105-8001 (JP); KOSUGI, Shinichiro, Tokyo 105-8001 (JP); SEKINO, Masahiro, Tokyo 105-8001 (JP); KURODA, Kazuto, Tokyo 105-8001 (JP); KIKUCHI, Yusuke, Tokyo 105-8001 (JP)
(74) Representative: AWA Sweden AB
(86) International application number: PCT/JP2015/057766
(87) International publication number: WO 2016/147307

(56) References cited:
- WO-A1-2014/118932
- WO-A1-2014/118932
- JP-A- 2005 295 694
- JP-A- 2008 199 763
- JP-A- 2008 199 763
- JP-A- 2010 200 574
- JP-A- 2010 200 574
- JP-A- 2013 017 300
- JP-A- 2013 017 300
- JP-A- 2013 160 652
- JP-A- 2013 206 643
- JP-A- 2014 140 282
- JP-A- 2014 171 335

## Description

### FIELD

Embodiments described herein relate generally to a storage battery management device, a method, and a computer program product.

### BACKGROUND

In recent years, it is expected to use a large-scale storage battery system using secondary batteries to suppress a fluctuation in power generated from natural energy such as solar power or wind power, suppress a fluctuation in an interconnection flow caused by power demands, or shift a peak. In order to provide such a large-scale storage battery system, a plurality of storage battery devices capable of individually controlling charge/discharge power or the like are combined.

Such a storage battery system including a plurality of storage battery devices is used to suppress a fluctuation in the generated power, suppress a fluctuation in an interconnection flow, or shift a peak by distributing charge/discharge command values for the entire storage battery system to elements such as individual storage battery devices and performing a charge/discharge control for overall storage battery devices included in this storage battery system.

Background art is found in WO2014118932A1, JP2008199763A and JP2014171335A. It is noted that document WO2014118932A1 does not disclose performing diagnosis for battery boards or diagnosing them while a storage battery system is in operation.

In the aforementioned storage battery system of the related art, a battery board including a storage battery unit also includes a control device (BMU), a main circuit switch (contactor), an electric fuse, a current sensor (CT), a voltage measurement circuit between battery boards, and the like in addition to storage battery cells.

In order to inspect a resistance value or detection accuracy of each part to perform a diagnosis for the contactor, the electric fuse, the battery cell, the current sensor, and the like described above on the battery board, it is necessary to remove the battery board or a PCS from the system and individually inspect the battery board or the PCS, which may disadvantageously affect the electric grid.

A storage battery management device according to an embodiment is configured to manage a storage battery system including a plurality of battery boards and a plurality of power adjustment devices corresponding to the battery boards. The storage battery management device is configured to compensate charging power and discharging power of a battery board used in a diagnosis for the battery board, inside the storage battery system by transmitting and receiving the charging power or the discharging power between the plurality of power adjustment devices of the storage battery system, when performing the diagnosis while causing the storage battery system to remain operated.

### BRIEF DESCRIPTION OF DRAWINGS

FIG. 1 is a schematic diagram illustrating a natural energy power generation system including a plurality of storage battery systems.
FIG. 2 is a block diagram illustrating a schematic configuration of a storage battery system according to an embodiment.
FIG. 3 is an explanatory diagram illustrating specific configurations of a cell module, a CMU, and a BMU.
FIG. 4 is an explanatory diagram illustrating operations according to an embodiment.
FIG. 5 is a flowchart illustrating a failure diagnosis process according to an embodiment.
FIG. 6 is a conceptual diagram illustrating a failure diagnosis process according to an embodiment.
FIG. 7 is an explanatory diagram illustrating power compensation performed by each PCS during a diagnosis of any one of the PCSs.

### DETAILED DESCRIPTION

According to an embodiment, a storage battery management device is configured to manage storage battery systems each including a plurality of battery boards and a power adjustment device corresponding to the battery boards. The storage battery management device is configured to compensate charging power and discharging power of a battery board used in a diagnosis for the battery board, inside the storage battery systems by transmitting and receiving the charging power or the discharging power between power adjustment devices of the storage battery systems, when performing the diagnosis while causing the storage battery systems to remain operated.

### [1] First Embodiment

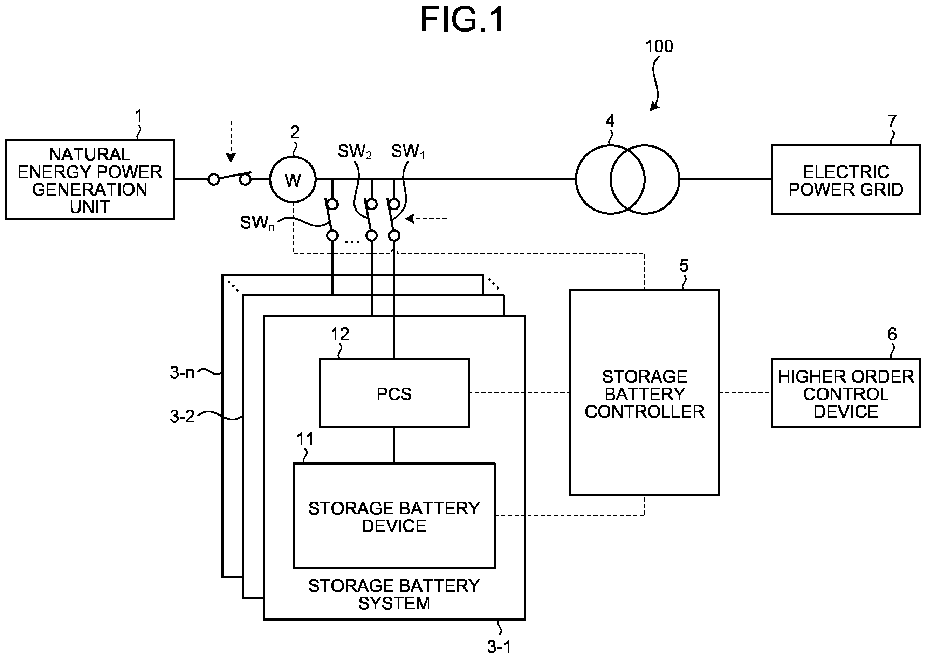

FIG. 1 is a schematic diagram illustrating a natural energy power generation system including a plurality of storage battery systems.

The natural energy power generation system 100 serving as a power generation system includes a natural energy power generation unit 1 capable of outputting grid power using natural energy (renewable energy) such as solar power, water power, wind power, biomass energy, and geothermal power, an electric power meter 2 configured to measure the power generated by the natural energy power generation unit 1, a plurality of storage battery systems 3-1 to 3-n charged with surplus power of the natural energy power generation unit 1 on the basis of the measurement result of the electric power meter 2 and configured to discharge deficient power to output it overlappingly with the power generated by the natural energy power generation unit 1, a transformer 4 configured to transform the voltage of the power output from the natural energy power generation unit 1 (including a case where the power output from the storage battery systems 3-1 to 3-n is overlapped), a storage battery controller 5 configured to locally control the storage battery systems 3-1 to 3-n, and an higher order control device 6 configured to perform a remote control of the storage battery controller 5.

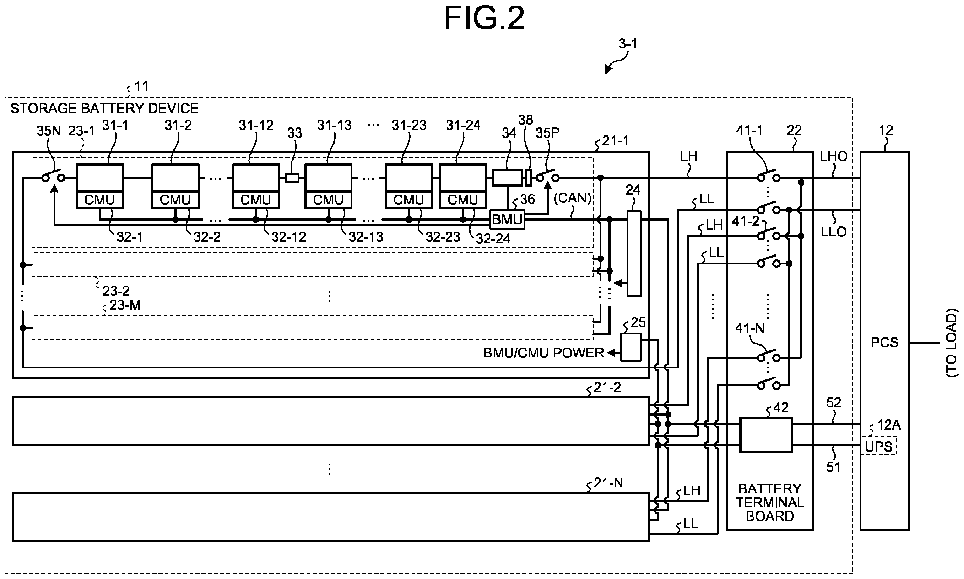

FIG. 2 is a schematic block diagram illustrating a storage battery system according to an embodiment.

Since the storage battery systems 3-1 to 3-n have the same configuration, the storage battery system 3-1 will be described representatively in the following description.

The storage battery system 3-1 generally includes a storage battery device 11 configured to store power and a power conditioning system (PCS) 12 configured to convert the DC power supplied from the storage battery device 11 into AC power having a desired electric power quality and supply it to a load.

The storage battery device 11 generally includes a plurality of battery boards 21-1 to 21-N (where "N" denotes any natural number) and a battery terminal board 22 connected to the battery boards 21-1 to 21-N.

Each of the battery boards 21-1 to 21-N includes a plurality of battery units 23-1 to 23-M connected in parallel with each other (where "M" denotes any natural number), a gateway unit 24, and a DC power unit 25 configured to supply the DC power for operation to a battery management unit (BMU) and a cell monitoring unit (CMU) described below.

Here, a configuration of the battery unit will be described.

The battery units 23-1 to 23-M are connected to output power lines (bus lines) LHO and LLO through a high-voltage-side power supply line LH and a low-voltage-side power supply line LL, respectively, to supply power to the power conditioning system 12 serving as a main circuit.

Battery units 23-1 to 23-M have the same configuration. Therefore, the battery unit 23-1 will be described representatively.

The battery unit 23-1 generally includes a plurality of (twenty four in FIG. 1) cell modules 31-1 to 31-24, a plurality of cell monitoring units (CMUs) 32-1 to 32-24 provided in the cell modules 31-1 to 31-24, a service disconnection 33 provided between the cell module 31-12 and the cell module 31-13, a current sensor 34, a positive-side contactor 35P, and a negative-side contactor 35N. The plurality of cell modules 31-1 to 31-24, the service disconnection 33, the current sensor 34, the positive-side contactor 35P, an electric fuse 38, and the negative-side contactor 35N are connected in series with each other.

Here, the cell modules 31-1 to 31-24 are connected to a plurality of battery cells in series and in parallel to constitute a battery pack. In addition, a plurality of cell modules 31-1 to 31-24 connected in series constitute a group of battery packs.

In addition, the battery unit 23-1 includes a BMU 36, and the communication line of each of CMUs 32-1 to 32-24 and the output line of the current sensor 34 are connected to the BMU 36.

A battery management unit (BMU) 36 controls the entire battery unit 23-1 under the control of the gateway unit 24 to control open/close states of the positive-side contactor 35P and the negative-side contactor 35N on the basis of a result of communication with each of CMUs 32-1 to 32-24 (measurement results of the voltage and the temperature) and a detection result of the current sensor 34.

Next, a configuration of the battery terminal board will be described.

The battery terminal board 22 includes a plurality of board breakers 41-1 to 41-N provided in association with the battery boards 21-1 to 21-N and a master unit 42 which is a microcomputer for controlling the entire storage battery device 11.

Between the master unit 42 and the power conditioning system 12, the master unit 42 is connected to a control power line 51 used to supply power to the power conditioning system 12 through an uninterruptible power system (UPS) 12A of the power conditioning system 12 and a control communication line 52 used to exchange control data via the Ethernet (registered trademark) network.

Here, the cell modules 31-1 to 31-24, the CMUs 32-1 to 32-24, and the BMU 36 will be described in more details.

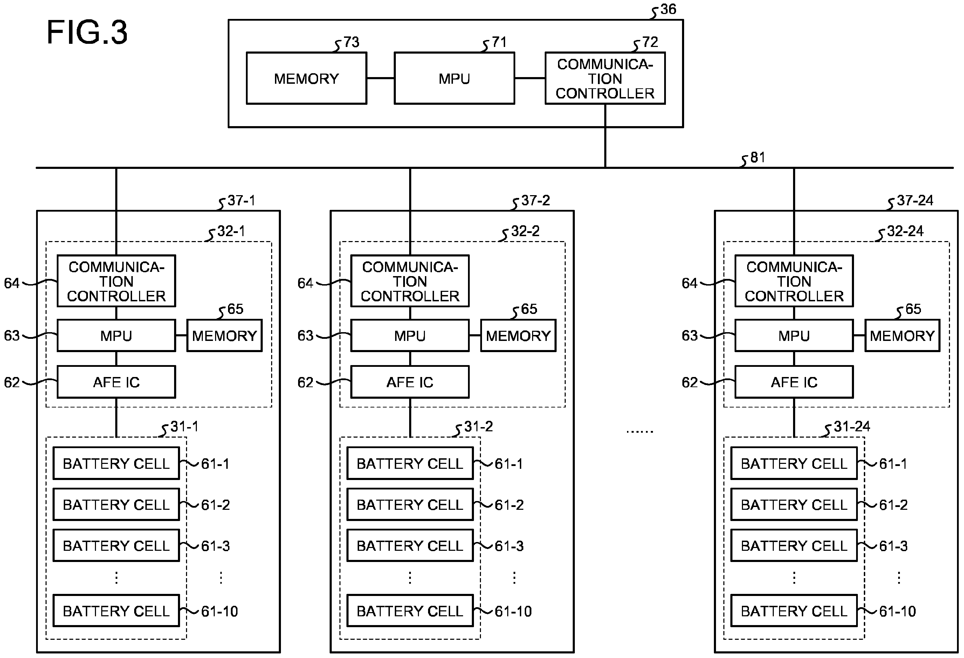

FIG. 3 is an explanatory diagram illustrating specific configurations of the cell module, the CMU, and the BMU.

Each of the cell modules 31-1 to 31-24 includes a plurality of (ten in FIG. 2) battery cells 61-1 to 61-10 connected in series.

Each of the CMUs 32-1 to 32-24 includes a voltage/temperature measurement IC (Analog Front End IC: AFE-IC) 62 for measuring voltages and temperatures of predetermined portions of the battery cells of the corresponding one of the cell modules 31-1 to 31-24, an MPU 63 configured to totally control the corresponding one of the CMUs 32-1 to 32-24, a communication controller 64 complying with the controller area network (CAN) standard for allowing the CAN communication with the BMU 36, and a memory 65 that stores the voltage data and the temperature data corresponding to the voltage of each cell.

In the following description, a combination of the corresponding cell modules 31-1 to 31-24 and the corresponding CMUs 32-1 to 32-24 will be referred to as battery modules 37-1 to 37-24. For example, a combination of the cell module 31-1 and the corresponding CMU 32-1 will be referred to as a battery module 37-1.

The BMU 36 includes an MPU 71 that totally controls the BMU 36, a communication controller 72 complying with the CAN standard for the CAN communication with the CMUs 32-1 to 32-24, and a memory 73 that stores the voltage data and the temperature data transmitted from the CMUs 32-1 to 32-24.

The storage battery controller 5 illustrated in FIG. 1 detects generated power of the natural energy power generation unit 1 and suppresses a fluctuation in the output of the generated power using the storage battery device 11 in order to reduce influence on the electric power grid from this generated power. Here, a fluctuation suppression amount for the storage battery device 11 is calculated using the corresponding storage battery controller 5 or the higher order control device 6 and is issued to the power conditioning system (PCS) 12 corresponding to the storage battery device 11 as a charge/discharge command.

Next, operations according to the embodiment will be described.

As illustrated in FIG. 2, the battery boards 21-1 to 21-N is configured to be capable of being shut off from the PCS 12, that is, from an electric grid using breakers 41-1 to 41-N.

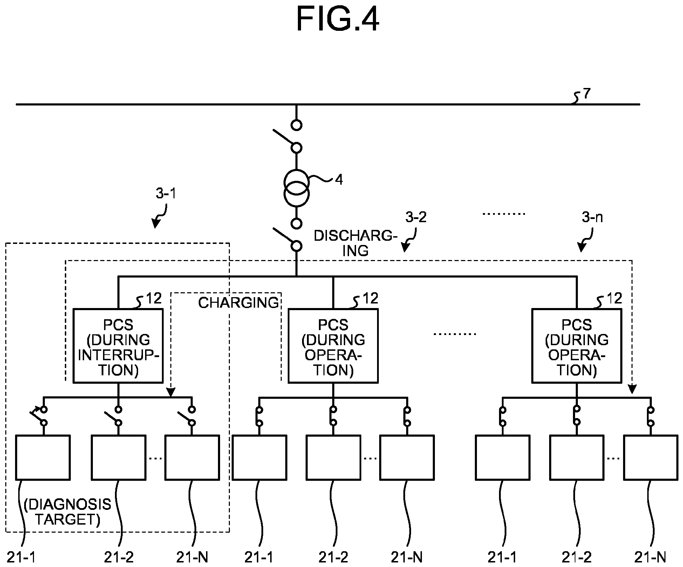

FIG. 4 is an explanatory diagram illustrating operations according to the embodiment.

In the following description, a case where a test is performed for the battery board 21-1 will be described by way of example.

A method of diagnosing a failure in the BMU (control device) of the battery board 21-1 under the control of the PCS 12 belonging to the storage battery system 3-1 in the natural energy power generation system 100 will be described by assuming that the storage battery device of this example is in 24-hour continuous operation.

According to this embodiment, in order to perform a failure diagnosis for the BMU 36 of the battery board 21-1, a current is controlled from the PCS 12 of the battery board 21-1 of the diagnosis target in the state where the storage battery device is connected to the electric grid.

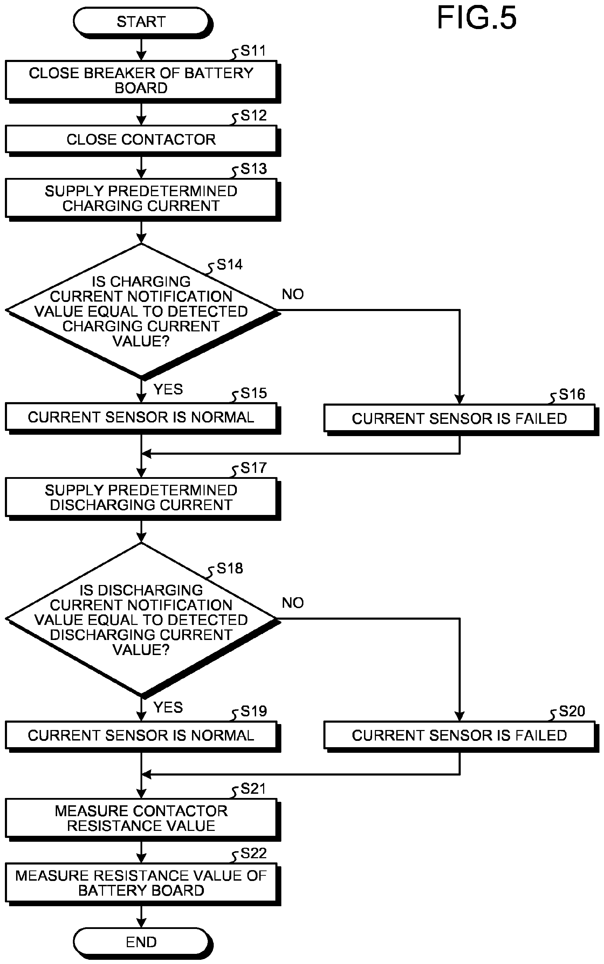

FIG. 5 is a flowchart illustrating a failure diagnosis process according to the embodiment.

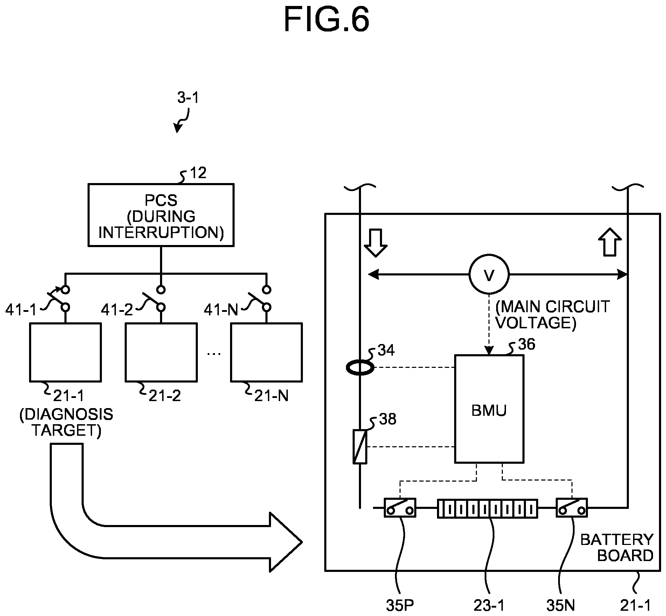

FIG. 6 is a conceptual diagram illustrating the failure diagnosis process according to the embodiment.

First, the storage battery controller 5 serving as a storage battery management device closes the breaker of the battery board corresponding to the BMU that is the diagnosis target (Step S11).

Specifically, a board breaker 41-1 of the battery board 21-1 that is under the control of the PCS 12 of higher order of the battery board 21-1 corresponding to the BMU 36 of the storage battery system 3-1 is closed. Subsequently, under the control of the storage battery controller 5, the BMU 36 closes the positive-side contactor 35P and the negative-side contactor 35N corresponding to the positive terminal (+) and the negative terminal (-), respectively, of the cell module 31-1 (Step S12).

Subsequently, under the control of the storage battery controller 5, the PCS 12 of the storage battery system 3-1 corresponding to the battery board 21-1 notifies the BMU 36 of the battery board 21-1 of a charging current amount, and control to cause the charging current corresponding to the notified charging current amount, to flow to the battery board 21-1 from other storage battery systems 3-2 to 3-n as illustrated in FIG. 4 is performed (Step S13).

As a result, the BMU 36 compares the charging current amount notified from the PCS 12 of the storage battery system 3-1 (charging current notification value) and the current amount detected by the current sensor 34 (detected charging current value) to determine whether or not they can be considered to be equal to each other as illustrated in FIG. 6 (Step S14).

If it can be considered that the charging current notification value is equal to the detected charging current value as a result of the comparison of Step S14 (Step S14; Yes), it is determined that the current sensor 34 is normal (Step S15).

Meanwhile, if it is not considered that the charging current notification value is equal to the detected charging current value as a result of the determination of Step S14, that is, if there is a gap between them (Step S14; No), it is determined that the current sensor 34 is failed, and this situation is memorized (Step S16).

Subsequently, under the control of the storage battery controller 5, the PCS 12 of the storage battery system 3-1 corresponding to the battery board 21-1 notifies the BMU 36 of the battery board 21-1 of a discharging current amount, and control to cause a discharging current corresponding to the notified charging current amount, to flow from the battery board 21-1 to other storage battery systems 3-2 to 3-n is performed (Step S17).

As a result, the BMU 36 compares the discharging current amount notified from the PCS 12 of the storage battery system 3-1 (discharging current notification value) and the current amount detected by the current sensor 34 (detected discharging current value) and determines whether or not they can be considered to be equal to each other (Step S18).

If it is considered that the discharging current notification value and the detected discharging current value are equal to each other as a result of the comparison of Step S18 (Step S18; Yes), it is determined that the current sensor 34 is normal (Step S19).

Meanwhile, if it is not considered that the discharging current notification value and the detected discharging current value are equal to each other as a result of the determination of Step S18, that is, if there is a gap between them (Step S18; No), it is determined that the current sensor 34 is failed (Step S20).

Subsequently, while one of the positive-side contactor 35P and the negative-side contactor 35N is closed (turned on), and the other one is opened (turned off), the resistance values of the positive-side contactor 35P and the negative-side contactor 35N are measured on the basis of a current value detected by the current sensor 34 and a voltage value detected by the voltage meter (Step S21).

In addition, it is possible to recognize a melting state or a deterioration state of the positive-side contactor 35P and the negative-side contactor 35N depending on the measured resistance value.
Then, the BMU 36 measures the resistance value of the entire circuit of the battery board 21-1 by measuring the charging current or discharging current and the voltage of the battery board while the positive-side contactor 35P and the negative-side contactor 35N are closed (Step S22).

As a result, it is possible to diagnose deterioration of the cell modules (battery cells 61-1 to 61-10) or the electric fuse 38.
However, in the aforementioned case, if a charging current or a discharging current is applied to the battery board 21-1 during the operation of the storage battery system 3-1 as described in Steps S13 and S17, the input/output power required for the storage battery device from the electric grid may be influenced.

In this regard, according to this embodiment, in order to suppress influence on the input/output power required for the storage battery device from the electric grid, the output power of other PCSs connected in parallel is controlled (in the aforementioned case, the PCSs 12 of the storage battery systems 3-2 to 3-n).

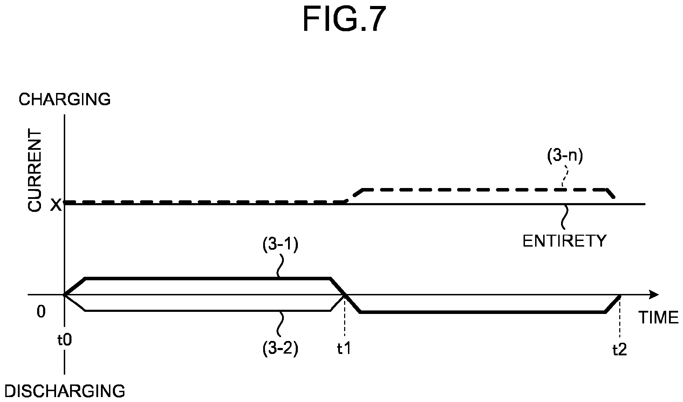

FIG. 7 is an explanatory diagram illustrating power compensation performed by each PCS during a diagnosis for any one of the PCSs.

During the timings t0 to t1 at which the PCS 12 of the storage battery system 3-1 discharges a small current, as indicated by the dotted-line arrow directed from the storage battery system 3-2 to the storage battery system 3-1 in FIG. 4 and as illustrated in FIG. 7, the power compensation that causes the power charged by the PCS 12 of the storage battery system 3-1 to correspond to the power discharged by the PCS 12 of the storage battery system 3-2 is performed in order to suppress a fluctuation of the charging current X required for the overall storage battery systems 3-1 to 3-n from the electric grid, and keep the charging current X.

During the timings t1 to t2 at which the PCS 12 of the storage battery system 3-1 charges a small current, as indicated by the dotted-line arrow directed from the storage battery system 3-1 to the storage battery system 3-n in FIG. 4 and as illustrated in FIG. 7, the power compensation that causes the power discharged by the PCS 12 of the storage battery system 3-1 to be received by the PCS 12 of the storage battery system 3-n as the charging power is performed in order to suppress a fluctuation of the charging current X required for the overall storage battery systems 3-1 to 3-n from the electric grid, and keep the charging current X.

As described above, by operating the PCSs 12 such that the charging power and the discharging power are compensated between the PCSs 12, it is possible to achieve control such that a failure diagnosis is performed using a PCS 12 of any storage battery system such as the PCS 12 of the storage battery system 3-n in the aforementioned example during the operation of the storage battery device without influencing on the electric grid.

According to this embodiment, it is possible to perform a diagnosis for a battery board control device without influencing on the electric grid.

The storage battery management device (storage battery controller) according to this embodiment has a typical computer-based hardware configuration including a control device such as a CPU, a memory device such as a read-only memory (ROM) and a random access memory (RAM), an external storage device such as a hard disk drive (HDD) or a compact disc (CD) drive device, a display device as necessary, and an input device such as a keyboard or a mouse.

A program executed by the storage battery management device according to this embodiment is recorded on a computer readable recording medium such as a CD-ROM, a flexible disk (FD), a compact disc recordable (CD-R), and a digital versatile disk (DVD) in an installable format or an executable format.

The program executed by the storage battery management device according to this embodiment may be stored in a computer connected to a network such as the Internet and may be downloaded via the network. In addition, the program executed by the storage battery management device according to this embodiment may be provided or distributed via a network such as the Internet.

Furthermore, the program of the storage battery management device according to this embodiment may be embedded in a ROM or the like in advance to be provided.

While several embodiments of the invention have been described hereinbefore, such embodiments are just for illustrative purposes, and are not intended to limit the scope of the invention. These novel embodiments may be embodied in various other forms, and various omissions, substitutions, and changes may be within the scope of the invention as defined by the appended claims. Such embodiments and their modifications are construed as encompassing the scope or subject matter of the invention as attached in the claims and their equivalents.

## Claims

1. A storage battery management device (5) configured to manage storage battery systems (3-1, 3-2, ..., 3-m) each including a plurality of battery boards (21-1, 21-2, ..., 21-n) and a power adjustment device (12) corresponding to the battery boards, wherein
the storage battery management device (5) is configured to compensate charging power and discharging power of a battery board used in a diagnosis for the battery board, inside the storage battery systems (3-1, 3-2, ..., 3-m) by transmitting and receiving the charging power or the discharging power between the power adjustment devices (12) of the storage battery systems (3-1, 3-2, ..., 3-m), when performing the diagnosis while causing the storage battery systems (3-1, 3-2, ..., 3-m) to remain operated.

2. The storage battery management device (5) according to claim 1, wherein, when the power adjustment devices (12) are controlled to perform the diagnosis for the battery board, the charging power or the discharging power is transmitted and received between a pair of power adjustment devices including a power adjustment device corresponding to the battery board that is a diagnosis target.

3. The storage battery management device (5) according to claim 1 or 2, wherein the battery board includes:
a battery unit including a plurality of battery cells;
a positive-side contactor provided at a positive terminal of the battery unit; and
a negative-side contactor provided at a negative terminal of the battery unit, and
the diagnosis is performed by measuring resistance values of the positive-side contactor and the negative-side contactor while one of the positive-side contactor and the negative-side contactor is opened and the other is closed.

4. The storage battery management device (5) according to any one of claims 1 to 3, wherein the battery board includes a plurality of battery cells (61-1 to 61-10) and a battery management unit (BMU) configured to perform a charge/discharge control for the battery cells, and
the battery management unit (BMU) compares a current notification value from the power adjustment device with a detected current value actually detected by a current sensor, and determines that the current sensor is failed if there is a gap between the current notification value and the detected current value.

5. A method executed by a storage battery management device configured to manage storage battery systems (3-1, 3-2, ..., 3-m) each including a plurality of battery boards (21-1, 21-2, ..., 21-n) and a power adjustment device corresponding to the battery boards (21-1, 21-2, ..., 21-n), the method comprising:
performing a diagnosis for a battery board while causing the storage battery systems (3-1, 3-2, ..., 3-m) to remain operated; and
compensating charging power and discharging power of the battery board used in the diagnosis for the battery board, inside the storage battery systems (3-1, 3-2, ..., 3-m) by transmitting and receiving the charging power or the discharging power between the power adjustment devices in the storage battery system (3-1, 3-2, ..., 3-m).

6. A program for controlling a storage battery management device (5) configured to manage storage battery systems (3-1, 3-2, ..., 3-m) each including a plurality of battery boards (21-1, 21-2, ..., 21-n)and a power adjustment device (12) corresponding to the battery boards (21-1, 21-2, ..., 21-n) using a computer, the program causing the computer to function as
a means for performing a diagnosis for a battery board while causing the storage battery systems (3-1, 3-2, ..., 3-m) to remain operated, and
a means for compensating charging power and discharging power of the battery board used in the diagnosis for the battery board, inside the storage battery systems (3-1, 3-2, ..., 3-m) by transmitting and receiving the charging power or the discharging power between the power adjustment devices (12) inside the storage battery systems (3-1, 3-2, ..., 3-m).

## Patentansprüche

1. Speicherbatterieverwaltungsvorrichtung (5), die dafür ausgelegt ist, Speicherbatteriesysteme (3-1, 3-2, ..., 3-m) zu verwalten, die jeweils mehrere Batterieplatinen (21-1, 21-2, ..., 21-n) und eine Leistungsanpassungsvorrichtung (12), die den Batterieplatinen entspricht, umfassen, wobei
die Speicherbatterieverwaltungsvorrichtung (5) dafür ausgelegt ist, Ladeleistung und Entladeleistung einer Batterieplatine, die bei einer Diagnose für die Batterieplatine verwendet wird, innerhalb der Speicherbatteriesysteme (3-1, 3-2, ..., 3-m) durch Senden und Empfangen der Ladeleistung oder der Entladeleistung zwischen den Leistungsanpassungsvorrichtungen (12) der Speicherbatteriesysteme (3-1, 3-2, ..., 3-m) beim Durchführen der Diagnose zu kompensieren und gleichzeitig zu bewirken, dass die Speicherbatteriesysteme (3-1, 3-2, ..., 3-m) in Betrieb bleiben.

2. Speicherbatterieverwaltungsvorrichtung (5) nach Anspruch 1, wobei, wenn die Leistungsanpassungsvorrichtungen (12) gesteuert werden, um die Diagnose für die Batterieplatine durchzuführen, die Ladeleistung oder die Entladeleistung zwischen einem Paar von Leistungsanpassungsvorrichtungen gesendet und empfangen wird, einschließlich einer Leistungsanpassungsvorrichtung, die der Batterieplatine entspricht, die ein Diagnoseziel ist.

3. Speicherbatterieverwaltungsvorrichtung (5) nach Anspruch 1 oder 2, wobei die Batterieplatine Folgendes umfasst:
eine Batterieeinheit, die mehrere Batteriezellen umfasst;
ein Schütz auf der positiven Seite, das an einem Pluspol der Batterieeinheit bereitgestellt ist; und
ein Schütz auf der negativen Seite, das an einem Minuspol der Batterieeinheit bereitgestellt ist; und
wobei die Diagnose durchgeführt wird durch Messen von Widerstandswerten des Schützes auf der positiven Seite und des Schützes auf der negativen Seite, während eines von dem Schütz auf der positiven Seite und dem Schütz auf der negativen Seite geöffnet ist und das andere geschlossen ist.

4. Speicherbatterieverwaltungsvorrichtung (5) nach einem der Ansprüche 1 bis 3, wobei die Batterieplatine mehrere Batteriezellen (61-1 bis 61-10) und eine Batterieverwaltungseinheit (BVE), die dafür ausgelegt ist, eine Lade-/Entladesteuerung für die Batteriezellen durchzuführen, umfasst, und
die Batterieverwaltungseinheit (BVE) einen Strom-Meldewert von der Leistungsanpassungsvorrichtung mit einem durch einen Stromsensor tatsächlich erfassten Stromwert vergleicht und bestimmt, dass der Stromsensor ausgefallen ist, wenn eine Differenz zwischen dem Strom-Meldewert und dem erfassten Stromwert vorliegt.

5. Verfahren, ausgeführt durch eine
Speicherbatterieverwaltungsvorrichtung, die dafür ausgelegt ist, Speicherbatteriesysteme (3-1, 3-2, ..., 3-m) zu verwalten, die jeweils mehrere Batterieplatinen (21-1, 21-2, ..., 21-n) und eine Leistungsanpassungsvorrichtung, die den Batterieplatinen (21-1, 21-2, ..., 21-n) entspricht, umfassen, wobei das Verfahren Folgendes umfasst:
Durchführen einer Diagnose für eine Batterieplatine und gleichzeitiges Bewirken, dass die Speicherbatteriesysteme (3-1, 3-2, ..., 3-m) in Betrieb bleiben; und
Kompensieren der Ladeleistung und Entladeleistung der Batterieplatine, die bei der Diagnose für die Batterieplatine verwendet wird, innerhalb der Speicherbatteriesysteme (3-1, 3-2, ..., 3-m) durch Senden und Empfangen der Ladeleistung oder der Entladeleistung zwischen den Leistungsanpassungsvorrichtungen in dem Speicherbatteriesystem (3-1, 3-2, ..., 3-m).

6. Programm zur Steuerung einer
Speicherbatterieverwaltungsvorrichtung (5), die dafür ausgelegt ist, Speicherbatteriesysteme (3-1, 3-2, ..., 3-m) zu verwalten, die jeweils mehrere Batterieplatinen (21-1, 21-2, ..., 21-n) und eine Leistungsanpassungsvorrichtung (12), die den Batterieplatinen (21-1, 21-2, ..., 21-n) entspricht, umfassen, wobei das Programm bewirkt, dass der Computer fungiert als
ein Mittel zum Durchführen einer Diagnose für eine Batterieplatine bei gleichzeitigem Bewirken, dass die Speicherbatteriesysteme (3-1, 3-2, ..., 3-m) in Betrieb bleiben, und
ein Mittel zum Kompensieren der Ladeleistung und Entladeleistung der Batterieplatine, die bei der Diagnose für die Batterieplatine verwendet wird, innerhalb der Speicherbatteriesysteme (3-1, 3-2, ..., 3-m) durch Senden und Empfangen der Ladeleistung oder der Entladeleistung zwischen den Leistungsanpassungsvorrichtungen (12) innerhalb der Speicherbatteriesysteme (3-1, 3-2, ..., 3-m).

## Revendications

1. Dispositif de gestion de batteries d'accumulateur (5) configuré pour gérer des systèmes de batteries d'accumulateur (3-1, 3-2, ..., 3-m) incluant chacun une pluralité de cartes de batteries (21-1, 21-2, ..., 21-n) et un dispositif d'ajustement de puissance (12) correspondant aux cartes de batteries, dans lequel
le dispositif de gestion de batteries d'accumulateur (5) est configuré pour compenser la puissance de chargement et la puissance de déchargement d'une carte de batterie utilisée dans un diagnostic pour la carte de batterie, à l'intérieur des systèmes de batteries d'accumulateur (3-1, 3-2, ..., 3-m) en transmettant et en recevant la puissance de chargement ou la puissance de déchargement entre les dispositifs d'ajustement de puissance (12) des systèmes de batteries d'accumulateur (3-1, 3-2, ..., 3-m), lors de la réalisation du diagnostic tout en faisant que les systèmes de batteries d'accumulateur (3-1, 3-2, ..., 3-m) continuent de fonctionner.

2. Dispositif de gestion de batteries d'accumulateur (5) selon la revendication 1, dans lequel, lorsque les dispositifs d'ajustement de puissance (12) sont commandés pour exécuter le diagnostic pour la carte de batterie, la puissance de chargement ou la puissance de déchargement est transmise et reçue entre une paire de dispositifs d'ajustement de puissance incluant un dispositif d'ajustement de puissance correspondant à la carte de batterie qui est une cible de diagnostic.

3. Dispositif de gestion de batteries d'accumulateur (5) selon la revendication 1 ou 2, dans lequel, la carte de batterie comprend :
une unité de batterie incluant une pluralité de cellules de batterie ;
un contacteur côté positif prévu à une borne positive de l'unité de batterie ; et
un contacteur côté négatif prévu à une borne négative de l'unité de batterie, et
le diagnostic est exécuté en mesurant des valeurs de résistance du contacteur côté positif et du contacteur côté négatif tandis qu'un du contacteur côté positif et du contacteur côté négatif est ouvert et l'autre est fermé.

4. Dispositif de gestion de batteries d'accumulateur (5) selon l'une quelconque des revendications 1 à 3, dans lequel la carte de batterie inclut une pluralité de cellules de batterie (61-1 à 61-10) et une unité de gestion de batterie (BMU) configurée pour exécuter une commande de chargement/déchargement pour les cellules de batterie, et
l'unité de gestion de batterie (BMU) compare une valeur de notification de courant venant du dispositif d'ajustement de puissance à une valeur de courant détectée effectivement détectée par un capteur de courant, et détermine que le capteur de courant est défectueux s'il y a un écart entre la valeur de notification de courant et la valeur de courant détectée.

5. Procédé exécuté par un dispositif de gestion de batteries d'accumulateur configuré pour gérer des systèmes de batteries d'accumulateur (3-1, 3-2, ..., 3-m) incluant chacun une pluralité de cartes de batteries (21-1, 21-2, ..., 21-n) et un dispositif d'ajustement de puissance correspondant aux cartes de batteries (21-1, 21-2, ..., 21-n), le procédé comprenant :
d'exécuter un diagnostic pour une carte de batterie tout en faisant que les systèmes de batteries d'accumulateur (3-1, 3-2, ..., 3-m) continuent de fonctionner ; et
de compenser la puissance de chargement et la puissance de déchargement de la carte de batterie utilisée dans le diagnostic pour la carte de batterie, à l'intérieur des systèmes de batteries d'accumulateur (3-1, 3-2, ..., 3-m) en transmettant et en recevant la puissance de chargement ou la puissance de déchargement entre les dispositifs d'ajustement de puissance dans le système de batteries d'accumulateur (3-1, 3-2, ..., 3-m).

6. Programme pour commander un dispositif de gestion de batteries d'accumulateur (5) configuré pour gérer des systèmes de batteries d'accumulateur (3-1, 3-2, ..., 3-m) incluant chacun une pluralité de cartes de batteries (21-1, 21-2, ..., 21-n) et un dispositif d'ajustement de puissance (12) correspondant aux cartes de batteries (21-1, 21-2, ..., 21-n) en utilisant un ordinateur, le programme faisant que l'ordinateur fonctionne en tant qu'un moyen pour exécuter un diagnostic pour une carte de batterie tout en faisant que les systèmes de batteries d'accumulateur (3-1, 3-2, ..., 3-m) continuent de fonctionner, et
un moyen pour compenser la puissance de chargement et la puissance de déchargement de la carte de batterie utilisée dans le diagnostic pour la carte de batterie, à l'intérieur des systèmes de batteries d'accumulateur (3-1, 3-2, ..., 3-m) en transmettant et en recevant la puissance de chargement ou la puissance de déchargement entre les dispositifs d'ajustement de puissance (12) à l'intérieur des systèmes de batteries d'accumulateur (3-1, 3-2, ..., 3-m).
